# FASCICULE DE BREVET EUROPEEN

(11) **EP 3 377 296 B1**
(45) Date de publication et mention de la délivrance du brevet: **13.11.2019**
(21) Numéro de dépôt: 16819126.0
(22) Date de dépôt: 18.11.2016
(51) Int. Cl.: B29C 49/04, B29C 49/20, B29C 49/24, B29K 75/00, B29L 31/00

(54) **PROCEDE DE PRODUCTION DE POCHE SOUPLE EN MATIERE THERMOPLASTIQUE SOUPLE**
VERFAHREN ZUR HERSTELLUNG EINES FLEXIBLEN BEUTEL AUS FLEXIBLEM THERMOPLASTISCHEM MATERIAL
METHOD FOR PRODUCING A FLEXIBLE POUCH MADE OF FLEXIBLE THERMOPLASTIC MATERIAL

(30) Priorité: 18.11.2015 FR 1561096
(43) Date de publication de la demande: 26.09.2018
(73) Titulaire: Nextis, 71100 Chalon Sur Saône (FR); Matissart Nord, 62113 Labourse (FR)
(72) Inventeur: BLANC NÉE PETIOT, Catherine, 71380 Saint Marcel (FR); CELERIER, Yannick, 71510 Aluze (FR); ODE, Pascal, 92200 Neuilly Sur Seine (FR); PAPILLON, Julien, 92380 Garches (FR)
(74) Mandataire: Oudin, Stéphane
(86) Numéro de dépôt international: PCT/FR2016/053021
(87) Numéro de publication internationale: WO 2017/085431

(56) Documents cités:
- WO-A1-2009/018388
- JP-A- H0 747 104
- JP-A- H07 117 105
- US-A1- 2013 256 955

## Description

### Domaine technique

La présente invention concerne un procédé de production de poche souple et préférentiellement de poche souple à usage médical en matière thermoplastique souple. La présente invention concerne également les poches souples obtenues par ledit procédé.

### Technique antérieure

Les poches souples destinées à contenir des liquides sont bien connues de l'art antérieur et servent notamment à transporter et à conserver des liquides destinés à l'alimentation ou à l'usage médical.

Parmi les poches destinées au transport de liquide alimentaire, on peut notamment citer les poches destinées au transport de boissons dans le cadre d'activités sportives (aussi appelées « camel bag »). Toutefois cet usage reste limité par rapport à celui des enceintes en plastique rigide (e.g. le polyéthylène) majoritaire dans le domaine.

L'usage des poches souples est beaucoup plus développé dans le domaine médical où la souplesse est particulièrement importante car elle permet d'obtenir des enceintes de volume nul (i.e. vide de gaz et notamment d'air ambiant) en absence de liquide intérieur. Ainsi, les poches souples permettent de maintenir l'asepsie des produits contenus (sang, solutions, médicaments) tout au long de leur utilisation.

A ce jour, la totalité des poches souples, de type poche médicale ou alimentaire, sont réalisées par soudures à haute fréquence ou à chaud, à partir de films thermoplastiques. Plus précisément, les poches sont réalisées par soudure de deux couches l'une sur l'autre, en épargnant la zone du contenu. En général, les films sont en PVC (Polychlorure de vinyle) ou en PP (Polypropylène) et les poches peuvent présenter différentes dimensions pour afficher un volume de contenu compris entre 50 et 1000 ml.

Les poches actuelles répondent à leur fonction principale mais présentent toutes des inconvénients dus à la fois aux matériaux, ainsi qu'au procédé de fabrication.

Le premier inconvénient est lié à l'usage obligatoire de plastifiant dans les matières thermoplastiques utilisées (particulièrement dans le cas du PVC). Ces différents plastifiants peuvent avoir tendance à migrer dans le liquide ce qui soulève des problèmes sanitaires importants, particulièrement lorsqu'il s'agit de liquides injectables ou ingérés par l'homme.

Par ailleurs, l'utilisation de films entraine un certain nombre d'étapes obligatoires parmi lesquelles on peut notamment citer le calandrage, la découpe, la soudure à plat et l'assemblage final de la poche obtenu avec l'insert faisant fonction de moyen de bouchage.

En plus d'être chronophage, ces différentes étapes engendrent des pertes de produits liées à la découpe et la production de structures gênantes telles des arêtes vives potentiellement coupantes.

Le document JP H07 117105 décrit un procédé de production d'une poche souple en matériau thermoplastique souple comprenant les étapes consistant à :(i) préparer ledit matériau thermoplastique souple chaud à l'état pâteux, (ii) disposer un insert préalablement moulé, sur une canne de soufflage comprenant une zone de soufflage, ledit insert étant disposé annulairement autour de ladite canne de telle sorte que la zone de soufflage de ladite canne soit en aval dudit insert, (iii) enrober tout ou partie dudit insert de matériau thermoplastique souple chaud à l'état pâteux sous la forme d'une paraison ou d'une gaine, (iv) verrouiller les coquilles empreintes d'un moule de soufflage puis introduire l'insert dans le moule une fois le moule déjà fermé de telle sorte à former une enceinte, ladite canne de soufflage et ladite paraison étant introduite par le haut dudit moule, (v) injecter un gaz sous pression à l'intérieur de ladite enceinte de telle sorte à expanser la gaine par l'intérieur sur la surface interne dudit moule ou à expanser la gaine par l'extérieur en créant une dépression à l'intérieur de ladite enceinte.

La présente invention se propose donc d'offrir un procédé de production de poches souples destinées à contenir des liquides contournant les problèmes soulevés ci-dessus. Plus particulièrement, ledit procédé est plus économique et permet d'obtenir des poches souples sans arêtes et ne nécessitant pas forcément d'additifs tels que les plastifiants.

### Résumé de l'invention

Ainsi la présente invention concerne un procédé de production d'une poche souple en matériau thermoplastique souple remarquable en ce qu'il comprend les étapes consistant à :
(i) préparer ledit matériau thermoplastique souple chaud à l'état pâteux,
(ii) disposer un insert, dit insert proximal, préalablement moulé, sur un support de telle sorte que ledit insert est disposé annulairement autour dudit support,
(iii) enrober tout ou partie dudit insert de matériau thermoplastique souple chaud à l'état pâteux,
(iv) verrouiller les coquilles empreintes du moule de soufflage autour dudit insert,
(v) injecter un gaz sous pression à l'intérieur de ladite enceinte de telle sorte à expanser la gaine par l'intérieur sur la surface interne dudit moule.

Alternativement, l'étape (v) pourra être remplacée par une étape (V') consistant à expanser la gaine par l'extérieur en créant une dépression à l'intérieur de ladite enceinte.

L'étape (v) du procédé selon l'invention pourra être réalisée via une aiguille d'injection ou une canne de soufflage.

Avantageusement, ledit support est une canne de soufflage comprenant une zone de soufflage et ledit insert est disposé annulairement autour de ladite canne de telle sorte que la zone de soufflage de ladite canne est en aval ou à l'intérieur dudit insert, les étapes suivantes du procédé consiste à
(iii) enrober tout ou partie dudit insert et de ladite canne de soufflage de matériau thermoplastique souple chaud à l'état pâteux,
(iv) verrouiller les coquilles empreintes du moule de soufflage autour de ladite canne de soufflage et dudit insert,
(v) injecter un gaz sous pression à l'intérieur de ladite enceinte via ladite zone de soufflage de telle sorte à expanser la gaine par l'intérieur sur la surface interne dudit moule.

Les matériaux thermoplastiques souples sont bien connus de l'homme du métier. Préférentiellement, ledit matériau thermoplastique souple est choisi dans le groupe comprenant le polyuréthane, les thermoplastiques Elastomères (TPE, TPE- A, PEBA, PP EPDM, SEBS, EVA, ...) et les PVC souples. Selon un mode de réalisation tout à fait préféré, ledit matériau thermoplastique souple est un polyuréthane, ce dernier matériau présente l'avantage de pouvoir être utilisé sans additifs.

Les cannes de soufflage sont également bien connues de l'homme du métier, elles sont généralement de forme cylindrique, creuses et comprennent à leur extrémité ou à leur surface une ou plusieurs lumières communiquant avec l'intérieur de la canne. Les cannes de soufflage sont habituellement connectées à une source de gaz qui va circuler à l'intérieur de la canne puis vers l'extérieur via lesdites lumières.

Dans le cadre de la présente invention, le terme « zone de soufflage » fait référence à la région de la canne de soufflage comprenant la ou les lumières via lesquelles le gaz est injecté.

Dans le cadre de la présente invention, le terme « distal » fait référence à la portion de la canne de soufflage la plus proche de son extrémité libre et la plus éloignée de la connexion à la source de gaz. Le terme « proximal » est défini par opposition au terme « distal ».

Dans le cadre de la présente invention le terme « aval » entend désigner la portion de la canne en direction de la partie distale, par opposition le terme « amont » entend désigner la portion de la canne en direction de la partie proximale.

Dans le cadre de la présente invention le terme « enrober » entend signifier que ledit matériau thermoplastique souple vient former une enceinte autour de ladite canne de soufflage et dudit insert de telle sorte à encadrer au moins une partie de la zone d'injection. Ainsi, l'injection de gaz au travers de la ou des lumières de la canne de soufflage va provoquer l'expansion dudit matériau thermoplastique souple contre les parois dudit moule.

L'insert peut être intégralement enrobé par le matériau thermoplastique souple ou être enrobé uniquement sur sa portion distale laissant ainsi sa portion proximale nue.

L'enrobage de la canne de soufflage peut se faire sous la forme d'une paraison ou d'une gaine extrudée au fur et à mesure du déroulement du procédé de production selon l'invention.

Ladite paraison peut être d'épaisseur constante ou variable d'une zone à l'autre de ladite paraison.

Selon un mode de réalisation préféré de l'invention, ledit procédé met en œuvre au moins un deuxième insert, dit insert distal, disposé annulairement à l'extrémité distale de ladite canne de soufflage de telle sorte que lesdits inserts encadrent ladite zone de soufflage. Avantageusement, ledit deuxième insert est également enrobé en tout ou partie par ledit matériau thermoplastique souple lors de l'étape (iii).

Alternativement, le deuxième insert peut être disposé sur un autre support différent de la canne de soufflage.

Ainsi, il est possible d'obtenir des poches souples comprenant deux inserts disposés de part et d'autre du volume intérieur.

Selon un mode de réalisation préféré de l'invention, ladite gaine ou ladite paraison de matériau thermoplastique souple chaud à l'état pâteux vient enrober ladite canne de soufflage et ledit insert sous l'effet de la gravité.

Selon un mode de réalisation encore plus préféré de l'invention, ladite canne de soufflage et ledit insert sont introduits par le bas dudit moule, la portion distale de ladite canne étant à une altitude supérieure à la partie proximale de ladite canne.

Selon un mode de réalisation tout à fait préféré, ladite canne de soufflage et ledit insert sont introduits par le bas dudit moule, la portion distale de ladite canne étant à une altitude supérieure à la partie proximale de ladite canne et ladite paraison est introduite par le haut dudit moule.

Selon un mode de réalisation préféré de l'invention, ladite canne de soufflage est montée en rotation autour de son axe longitudinal. Dans ce mode de réalisation, il est possible d'utiliser des inserts avec filetage interne qui vont pouvoir être associés et/ou dissociés de ladite canne de soufflage par un mouvement de rotation de ladite canne de soufflage.

Selon un mode de réalisation préféré de l'invention, ladite canne de soufflage comprend plusieurs branches portant chacune un insert proximal.

Ce mode de réalisation permet d'obtenir des poches souples comprenant plusieurs inserts disposés à la même extrémité de ladite poche souple. Ce mode de réalisation permet également d'obtenir des poches souples comprenant plusieurs inserts à une extrémité de la poche souple et un ou plusieurs inserts à l'autre extrémité de ladite poche.

Dans le cadre de ce mode de réalisation, ladite canne de soufflage va prendre la forme d'une fourche comprenant plusieurs extensions appelées « branches » et comprenant chacune une extrémité libre.

Selon un mode de réalisation encore plus préféré de l'invention, au moins une des branches porte en outre un insert distal.

Selon un autre mode réalisation encore plus préféré, lesdites branches sont montées mobiles en translation les unes par rapport de sorte à pouvoir s'écarter les unes des autres. Ce mode de réalisation particulier permet d'étirer latéralement ladite paraison.

Ainsi la présente invention concerne un procédé comprenant une étape consistant à écarter les branches de ladite canne de soufflage après l'étape (iii) du procédé selon l'invention.

Selon un mode de réalisation préféré de l'invention, ledit procédé comprend une étape de remplissage, postérieure à l'étape (v) ou (v') mais préalable au déverrouillage du moule, où ladite poche souple est remplie par un liquide ou un gel.

La présente invention concerne également une poche souple en matériau thermoplastique souple obtenue par l'un quelconque des procédés selon l'invention.

### Brève description des dessins

- Les figures la-lb présentent un mode de réalisation d'une poche souple selon l'invention comprenant un insert proximal.
- Les figures 2a-2c présentent un deuxième mode de réalisation d'une poche souple selon l'invention comprenant un insert proximal et un insert distal. Les figures 2a-2c présentent également la position des inserts sur la canne de soufflage lors de l'exécution du procédé selon l'invention.
- Les figures 3a-3d présentent un mode de réalisation d'une poche souple selon l'invention comprenant plusieurs inserts proximaux.

### Description des modes de réalisation de l'invention

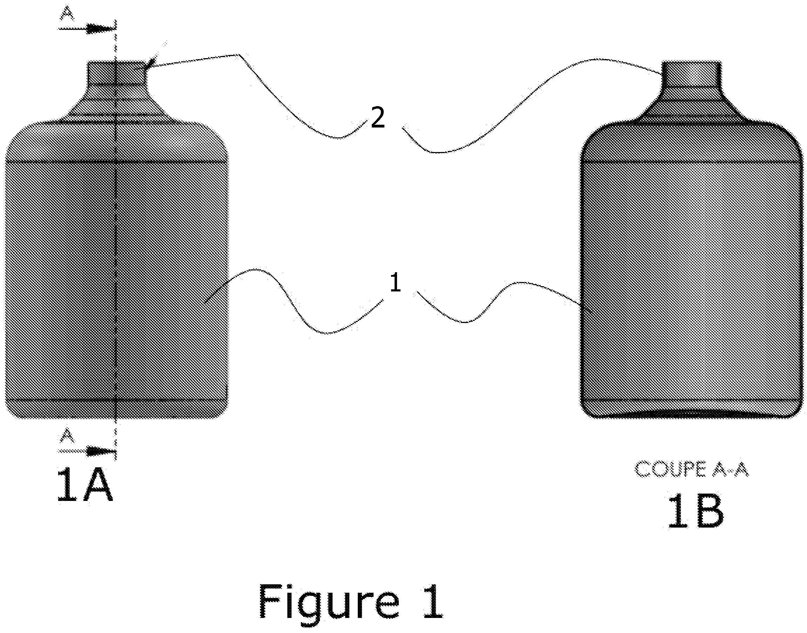

La figure 1a présente une vue de côté d'une poche souple 1 selon l'invention et la figure 1b présente une vue en coupe longitudinale selon le plan A-A de la même poche. La poche souple 1 comprend un insert 2 pouvant notamment servir de point d'accès à l'intérieur de la poche 1.

L'insert 2 peut prendre toutes les formes habituellement utilisées dans ce type de produit pour autant qu'il comporte une lumière longitudinale permettant le passage de la canne de soufflage lors du procédé selon l'invention. La canne de soufflage 4 est dimensionnée de telle sorte à s'étendre longitudinalement de l'amont de l'insert jusqu'à son extrémité libre en traversant ledit insert. Une fois la canne de soufflage 4 placée dans le moule, l'extrémité libre de celle-ci est idéalement placée à l'intérieur du moule à l'extrémité de la paroi formant le fond de la poche souple 1.

L'insert 2 peut avantageusement comprendre sur sa portion proximale nue un filetage pouvant coopérer avec un bouchon.

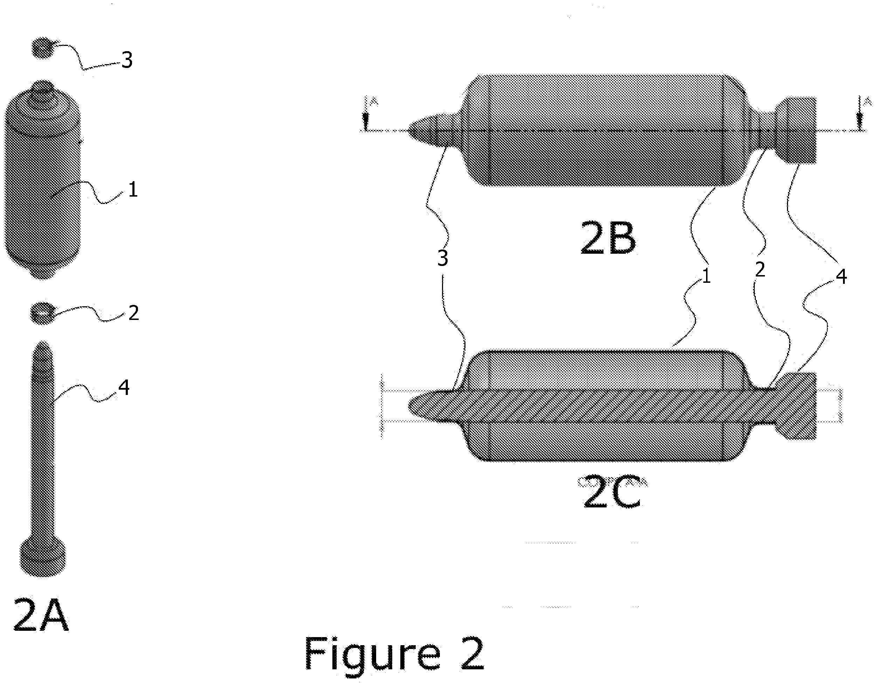

La figure 2a présente une vue en perspective d'un deuxième mode de réalisation d'une poche souple 1 selon l'invention comprenant un insert proximal 2 et un insert distal 3. La figure 2a présente également une vue en perspective de la canne de soufflage 4. La figure 2b présente une vue de côté de ladite poche 1 avec la canne 4 en position et la figure 2c une vue en coupe longitudinale selon le plan A-A.

L'insert proximal 2 et l'insert distal 3 sont placés annulairement autour de la canne de soufflage 4 qui va à la fois permettre la mise en position de ces inserts par rapport au reste de la poche 1 et également servir à injecter du gaz dans la zone comprise entre les deux inserts 2, 3 et permettre le soufflage de la matière thermoplastique souple formant la poche.

Une fois en place, les deux inserts 2, 3 et la canne de soufflage 4 vont être enrobés par de la matière thermoplastique souple chaude à l'état pâteux selon le procédé de l'extrusion soufflage. Avantageusement, la canne de soufflage est disposé de telle sorte que sa partie distale est à l'aplomb de sa partie proximale et de sorte à être introduite dans le moule à l'opposée de ladite paraison. Plus précisément, la matière thermoplastique souple chaude est extrudé via un jeu de poinçons et de filière préférentiellement placées à l'aplomb et de part et d'autre de la canne de soufflage. Cette gaine peut avoir une section de forme variable selon la nature de la poche à mouler. Habituellement, ladite section peut être circulaire ou ovale. La gaine de matière thermoplastique souple chaude va ainsi pouvoir descendre par gravité de part et d'autre de la canne de soufflage. Les conditions idéales d'extrusion de la matière thermoplastique souple sont bien connues de l'homme du métier. Préférentiellement, les filières d'extrusion sont préférentiellement réglées pour obtenir des gaines d'épaisseur comprises entre 0.1 et 10 mm.

Par ailleurs, la gaine de matière thermoplastique souple est également encadrée par les coques du moule utilisé pour former la poche.

Le moule utilisé, est un moule classique d'extrusion soufflage comprenant préférentiellement deux coques comprenant les empreintes destinées à former la poche et la portion de celle-ci venant se surmouler à la surface des inserts. Le moule est préférentiellement associé à un moyen de chauffage permettant de maintenir les coques à une température adaptée au soufflage de matière thermoplastique souple

Une fois la canne de soufflage 4 et les inserts 2, 3 encadrés par les gaines de matière thermoplastique souple, les coques du moule vont venir former une enceinte étanche autour de ceux-ci. Le gaz est alors injecté, via la canne de soufflage 4 ce qui va entrainer l'expansion de la matière thermoplastique souple contre les parois du moule.

Cette étape peut être combinée avec un procédé d'« in-mould labelling » (étiquetage dans le moule) permettant ainsi le marquage de la poche simultanément au soufflage de cette dernière.

La pression et la quantité de gaz injecté sont adaptées à la taille et la forme de la poche 1 souhaitée.

Le procédé selon l'invention peut également être utilisé pour obtenir une poche souple comprenant en outre un ou des inserts venant se positionner à l'extérieur de la poche souple. Dans ce mode de réalisation, la paraison de matériau thermoplastique souple va être préférentiellement surmoulée contre la face qui sera en contact avec l'insert.

Après formation de la poche 1, les coques du moule peuvent être séparées et la poche 1 dissociée de la canne de soufflage 4.

Les étapes précédemment décrites peuvent être automatisées et répétées autant que nécessaire.

On comprend ainsi que l'utilisation d'un procédé d'extrusion/soufflage/surmoulage à la production de poche souple en matière thermoplastique souple permet d'obtenir en une seule étape une poche 1 ne comprenant pas d'arêtes sans perte de matière.

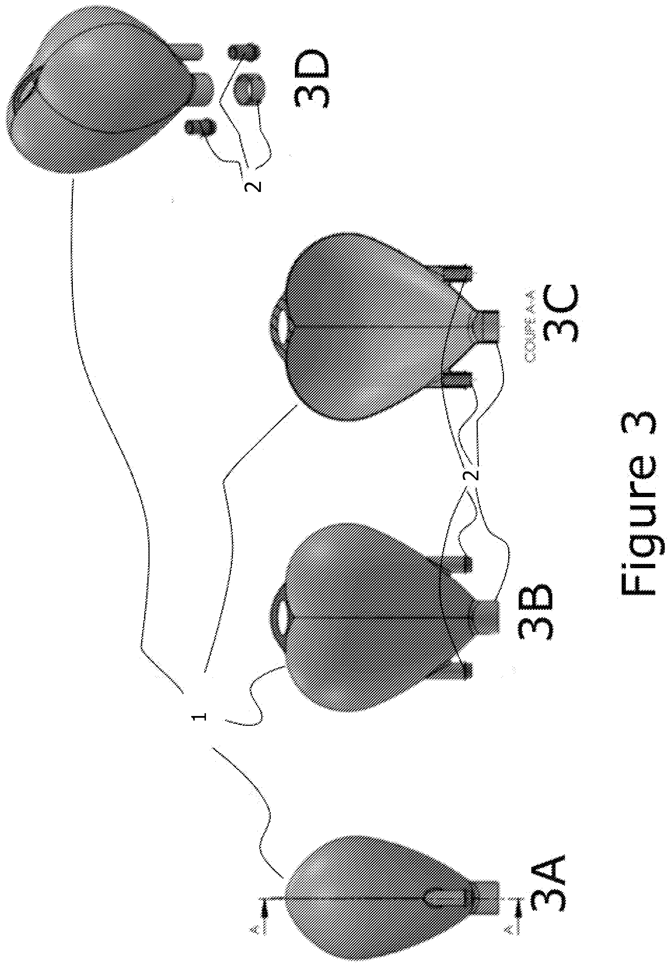

La figure 3a présente une vue de profil d'un autre mode de réalisation d'une poche souple 1 selon l'invention comprenant plusieurs inserts proximal 2. La figure 3b présente une vue de face du même mode de réalisation, la figure 3c montre une vue en coupe selon le plan 1-1 et la figure 3d montre une vue éclatée de ladite poche 1.

Ce dernier type de poche 1 est obtenu en utilisant une canne de soufflage 4 comprenant plusieurs branches (e.g. assemblées en forme de trident), dont au moins une comprend une zone d'injection, et apte à recevoir un insert proximal.

Le procédé selon l'invention permet de fabriquer des poches pour différents secteurs d'activités (médical, pharmaceutique, hygiène, cosmétique, alimentaire, etc...) de géométrie 3D avec notamment la possibilité d'obtenir des formes ludiques pour les enfants (Animaux, personnages de dessins animés, fleurs, frimousse (smileys), fruits, objets divers ...) .

## Revendications

1. Procédé de production d'une poche souple (1) en matériau thermoplastique souple comprenant les étapes consistant à :
(i) préparer ledit matériau thermoplastique souple chaud à l'état pâteux,
(ii)disposer un insert, dit insert proximal, préalablement moulé, sur une canne de soufflage, montée en rotation autour de son axe longitudinal et comprenant une zone de soufflage, ledit insert étant disposé annulairement autour de ladite canne de telle sorte que la zone de soufflage de ladite canne soit en aval ou à l'intérieur dudit insert,
(iii) enrober tout ou partie dudit insert de matériau thermoplastique souple chaud à l'état pâteux sous la forme d'une paraison ou d'une gaine,
(iv) verrouiller les coquilles empreintes d'un moule de soufflage autour dudit insert de telle sorte à former une enceinte ladite canne de soufflage et ledit insert étant introduits par le bas dudit moule, la portion distale de ladite canne étant à une altitude supérieure à la partie proximale de ladite canne et ladite paraison étant introduite par le haut dudit moule,
(v) injecter un gaz sous pression à l'intérieur de ladite enceinte de telle sorte à expanser la gaine par l'intérieur sur la surface interne dudit moule ou à expanser la gaine par l'extérieur en créant une dépression à l'intérieur de ladite enceinte.

2. Procédé de production d'une poche souple (1) en matériau thermoplastique souple selon la revendication 1 **caractérisé en ce que** le matériau thermoplastique souple est un polyuréthane.

3. Procédé de production d'une poche souple (1) en matériau thermoplastique souple selon l'une des revendications précédentes **caractérisé en ce qu'**il met en œuvre un deuxième insert (3), dit insert distal, disposé annulairement à l'extrémité distale de ladite canne de soufflage (4) de telle sorte que lesdits inserts (2, 3) encadrent ladite zone d'injection de gaz.

4. Procédé de production d'une poche souple (1) en matériau thermoplastique souple selon l'une des revendications précédentes **caractérisé en ce que** ladite gaine ou ladite paraison de matériau thermoplastique souple chaud à l'état pâteux vient enrober ladite canne de soufflage (4) et ledit insert (2, 3) sous l'effet de la gravité.

5. Procédé de production d'une poche souple (1) en matériau thermoplastique souple selon l'une des revendications précédentes **caractérisé en ce que** ladite canne de soufflage (4) comprend plusieurs branches portant chacune un insert (2) proximal.

6. Procédé de production d'une poche souple (1) en matériau thermoplastique souple selon la revendication précédente **caractérisé en ce qu'**au moins une des branches porte en outre un insert distal (3).

7. Procédé de production d'une poche souple (1) en matériau thermoplastique souple selon les revendications 5 ou 6 **caractérisé en ce que** lesdites branches sont montées mobiles en translation les unes par rapport de sorte à pouvoir s'écarter les unes des autres.

8. Procédé de production d'une poche souple (1) en matériau thermoplastique souple selon l'une des revendications précédentes **caractérisé en ce que** ledit procédé comprend une étape de remplissage, postérieure à l'étape (v) ou (v') mais préalable au déverrouillage du moule, où ladite poche souple est remplie par un liquide ou un gel.

## Patentansprüche

1. Verfahren zur Herstellung eines flexiblen Beutels (1) aus flexiblem thermoplastischem Material, umfassend die folgenden Schritte:
(i) Vorbereiten des warmen, flexiblen thermoplastischen Materials im pastösen Zustand,
(ii) Anordnen eines zuvor abgeformten Einsatzes, proximaler Einsatz genannt, auf einem Blasrohr, welches um seine Längsachse drehend montiert ist, und eine Blaszone umfasst, wobei der Einsatz ringförmig derart um das Rohr angeordnet wird, dass sich die Blaszone des Rohres stromabwärts oder im Inneren des Einsatzes befindet,
(iii) Einhüllen des gesamten Einsatzes oder eines Teils davon mit warmem, flexiblem thermoplastischem Material im pastösen Zustand in der Form eines Vorformlings oder einer Hülle,
(iv) Verriegeln der Abdruckschalen einer Blasform um den Einsatz, derart, um einen Einschluss zu bilden, wobei das Blasrohr und der Einsatz über die Unterseite der Form eingeführt werden, wobei der distale Abschnitt des Rohres auf einer Höhe oberhalb des proximalen Teils des Rohres ist und der Vorformling über die Oberseite der Form eingeführt wird,
(v) Einspritzen eines unter Druck stehenden Gases in das Innere des Einschlusses, derart, um die Hülle von innen an die innere Oberfläche der Form zu expandieren, oder die Hülle von außen zu expandieren, indem im Inneren des Einschlusses ein Unterdruck erzeugt wird.

2. Verfahren zur Herstellung eines flexiblen Beutels (1) aus flexiblem thermoplastischem Material nach Anspruch 1, **dadurch gekennzeichnet, dass** das flexible thermoplastische Material ein Polyurethan ist.

3. Verfahren zur Herstellung eines flexiblen Beutels (1) aus flexiblem thermoplastischem Material nach einem der vorstehenden Ansprüche, **dadurch gekennzeichnet, dass** es einen zweiten Einsatz (3), distaler Einsatz genannt, aufwendet, der ringförmig am distalen Ende des Blasrohres (4) derart angeordnet wird, dass die Einsätze (2, 3) die Gaseinspritzzone umrahmen.

4. Verfahren zur Herstellung eines flexiblen Beutels (1) aus flexiblem thermoplastischem Material nach einem der vorstehenden Ansprüche, **dadurch gekennzeichnet, dass** die Hülle oder der Vorformling aus warmem, flexiblem thermoplastischem Material in pastösem Zustand das Blasrohr (4) und den Einsatz (2, 3) unter der Wirkung der Schwerkraft einhüllt.

5. Verfahren zur Herstellung eines flexiblen Beutels (1) aus flexiblem thermoplastischem Material nach einem der vorstehenden Ansprüche, **dadurch gekennzeichnet, dass** das Blasrohr (4) mehrere Äste umfasst, die jeweils einen proximalen Einsatz (2) tragen.

6. Verfahren zur Herstellung eines flexiblen Beutels (1) aus flexiblem thermoplastischem Material nach dem vorstehenden Anspruch, **dadurch gekennzeichnet, dass** mindestens einer der Äste weiter einen distalen Einsatz (3) trägt.

7. Verfahren zur Herstellung eines flexiblen Beutels (1) aus flexiblem thermoplastischem Material nach den Ansprüchen 5 oder 6, **dadurch gekennzeichnet, dass** die Äste derart zueinander translationsbeweglich montiert sind, um sich voneinander zu entfernen.

8. Verfahren zur Herstellung eines flexiblen Beutels (1) aus flexiblem thermoplastischem Material nach einem der vorstehenden Ansprüche, **dadurch gekennzeichnet, dass** das Verfahren einen Schritt zum Füllen, nach dem Schritt (v) oder (v'), aber vor dem Entriegeln der Form umfasst, wo der flexible Beutel mit einer Flüssigkeit oder einem Gel gefüllt wird.

## Claims

1. Method for producing a flexible pouch (1) made of flexible thermoplastic material comprising the steps consisting of:
(i) preparing said hot flexible thermoplastic material in a pasty state,
(ii) placing a pre-moulded insert, or proximal insert, onto a blow pin, mounted in rotation around the longitudinal axis thereof and comprising a blow moulding area, said insert being arranged in a ring around said pin such that the blow moulding area of said pin is downstream from or inside said insert,
(iii) coating all or part of said insert with hot flexible thermoplastic material in a pasty state in the form of a parison or a sleeve,
(iv) locking the blow-mould shells around said insert so as to form a chamber, said blow pin and said insert being introduced via the bottom of said mould, the distal portion of said pin being at a greater height than the proximal part of said pin and said parison being introduced via the top of said mould,
(v) injecting a pressurised gas into said chamber so as to expand the sleeve from the inside onto the inner surface of said mould or expand the sleeve from the outside by creating negative pressure inside said chamber.

2. Method for producing a flexible pouch (1) made of flexible thermoplastic material according to claim 1 **characterised in that** the flexible thermoplastic material is a polyurethane.

3. Method for producing a flexible pouch (1) made of flexible thermoplastic material according to one of the preceding claims **characterised in that** it uses a second insert (3), or distal insert, arranged in a ring at the distal end of said blow pin (4) such that said inserts (2, 3) surround said gas injection area.

4. Method for producing a flexible pouch (1) made of flexible thermoplastic material according to one of the preceding claims **characterised in that** said sleeve or said parison of hot flexible thermoplastic material in a pasty state coats said blow pin (4) and said insert (2, 3) under the effect of gravity.

5. Method for producing a flexible pouch (1) made of flexible thermoplastic material according to one of the preceding claims **characterised in that** said blow pin (4) comprises a plurality of branches each bearing a proximal insert (2).

6. Method for producing a flexible pouch (1) made of flexible thermoplastic material according to the preceding claim **characterised in that** at least one of the branches further bears a distal insert (3).

7. Method for producing a flexible pouch (1) made of flexible thermoplastic material according to claims 5 or 6 **characterised in that** said branches are mounted movable in translation with respect to one another so as to be able to move away from one another.

8. Method for producing a flexible pouch (1) made of flexible thermoplastic material according to one of the preceding claims **characterised in that** said method comprises a filling step, after step (v) or (v') but prior to releasing the mould, where said flexible pouch is filled with a liquid or a gel.
